# EUROPÄISCHE PATENTSCHRIFT

(11) **EP 0 714 827 B1**
(45) Veröffentlichungstag und Bekanntmachung des Hinweises auf die Patenterteilung: **16.12.1998**
(21) Anmeldenummer: 95113973.2
(22) Anmeldetag: 06.09.1995
(51) Int. Cl.: B62M 25/04, B62K 23/04

(54) **Schalter für Getriebe an Fahrrädern**
Control device for bicycle derailleur
Dispositif de commande pour dérailleur de bicyclette

(30) Priorität: 02.12.1994 DE 4442952
(43) Veröffentlichungstag der Anmeldung: 05.06.1996
(73) Patentinhaber: SRAM Deutschland GmbH, 97424 Schweinfurt (DE)
(72) Erfinder: Arbeiter, Markus, Dipl.-Ing., D-97072 Würzburg (DE); Weishaupt, Christian, Dipl.-Ing., D-97525 Schwebheim (DE)

(56) Entgegenhaltungen:
- EP-A- 0 676 325
- FR-A- 2 657 062
- GB-A- 2 187 050
- US-A- 5 197 927

## Beschreibung

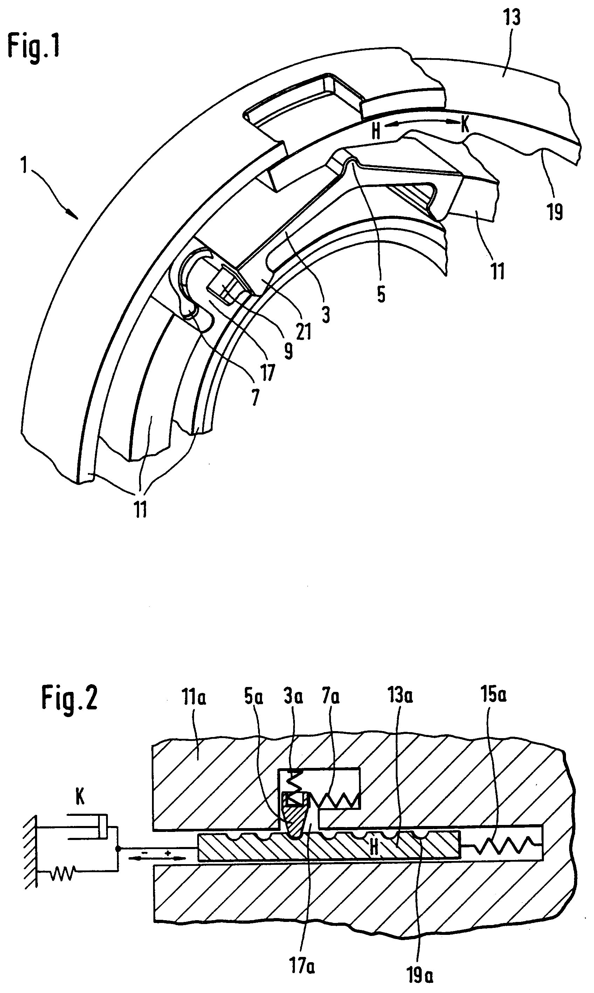

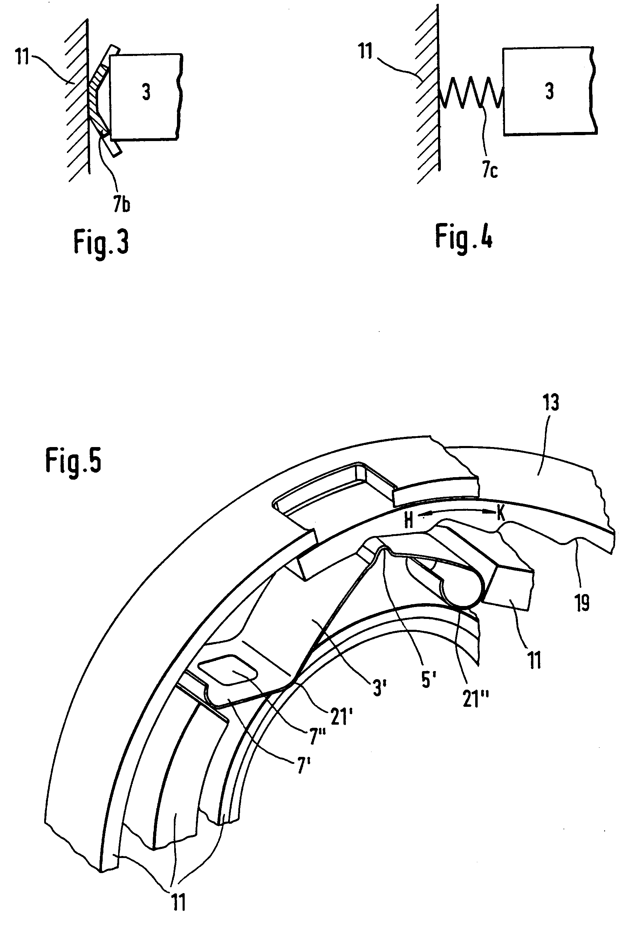

Die Erfindung betrifft einen Schalter zur Betätigung von Kettenschaltung an Fahrrädern gemäß dem Oberbegriff der Ansprüchen 1 und 7. Mit der FR 2 657 062 ist eine Schalter für Kettenschaltungen bekannt, der einen Drehring 44 mit einer Seileinhängung 43 und Griffenden 50 sowie ein lenkerfestes Gehäuse 22 mit Aussparungen für einen Federring 28 aufweist, welcher über Nasen 26 mit Aussparungen 46 im Drehring 44 zusammenwirkt. Dieser Federring 28 ist gemäß Fig. 2 einteilig und gemäß Fig. 4 zweiteilig ausgeführt, wobei es sich bei einem der Teile um die Rastfeder 29 handelt, die relativ zu dem zweiten Ringteil 29' um eine kleine Kreisringstrecke verdrehbar ist. Diese relative Verdrehbarkeit dient gemäß Anspruch 6 der Möglichkeit, den Schaltweg von einer Rastung zur nächsten gegen die Federkraft der Kettenschaltung um eben diese klein Relativdrehung zu vergrößern, wobei ein Überschaltweg erzeugt wird, der beim Umlegen der Kette vom kleinen auf den jeweils größeren Zahnkranz nach wie vor von großem Nutzen für die Schaltqualität ist.

Eine Verbesserung läßt sich durch die Einführung einer Überschaltfeder erreichen, die als Druckfeder in den Überschaltraum zwischen der Rastfeder und dem zweiten Ringteil bzw. dem Gehäuse anzubringen wäre. Der Vorteil liegt in einer definierten Lage der Rastfeder in der Ruhelage des Schaltsystems und in der Schaltpräzision die nach erfolgter Schaltung vom kleinen auf den jeweils großen Zahnkranz durch die augenblickliche Aufhebung des Überschaltzustandes erreicht wird. Aus Dokument US-A-5 197 927 ist auch bekannt, einen Schalter gemäß dem Oberbegriff der Ansprüchen 1 und 7.

Es ist daher die Aufgabe der Erfindung, eine Einrichtung zu schaffen, die es erlaubt, sofort nach Abschluß der Schaltbetätigung den Überschaltzustand zu beenden und die Kettenschaltung auf ihre exakte Position über den jeweils gewählten Zahnkranz zurückzuführen.

Die Lösung der Aufgabe ist in den Ansprüchen beschrieben.

Anhand von Zeichnungen und Skizzen wird ein Ausführungsbeispiel einer Einrichtung zur Unterstützung der Erreichung der exakten Position der Kettenschaltung nach erfolgter Überschaltung beschrieben. Es zeigen:
- Fig. 1: einen perspektivischen Ausschnitt eines Schalters mit einem Gehäuse, einem Rastelement und einer Rastfeder mit einer Überschaltfeder;
- Fig. 2: eine schematische Darstellung der am Zusammenkommen einer Überschaltwirkung beteiligten Elemente;
- Fig. 3: eine Variante der Überschaltfeder als Tellerfeder;
- Fig. 4: eine weitere Variante der Überschaltfeder als Spiralfeder.
- Fi.g 5: einen perspektivischen Ausschnitt gem. Fig. 1 mit einer Rastfeder aus Stahl-Band-Material und integrierter Überschaltfeder.

Bezeichnet man mit 1 einen Rastenschalter zur Betätigung einer Kettenschaltung K, so besteht dieser aus einem Gehäuse 11, welches mit einem Teil eines Fahrrades fest verbunden ist, einem innerhalb dieses Gehäuses 11 verschiebbaren Rastelement 13, welches einerseits mit einer Handbetätigung und andererseits mit der zu schaltenden Kettenschaltung am Fahrrad zwecks Änderung der Übersetzung verbunden ist. In dem vorliegenden Ausführungsbeispiel gemäß Fig. 1 handelt es sich um einen um den Griffteil einer Lenkstange herum angeordneten Drehgriffschalter, dessen Handbetätigung H mit dem Rastelement 13 verbunden ist. Ferner ist das Rastelement 13 mit dem ersten Ende eines Steuerdrahtes eines Bowdenzuges verbunden, während das zweite Ende des Steuerdrahtes mit der Kettenschaltung K verbunden ist. Das Rastelement 13 weist Rasten 19 auf, in die eine Nase 5 einer Rastfeder 3 eingreift. Die Rastfeder 3 ist in diesem Falle bügelförmig ausgestaltet und stützt sich mit zwei Vorsprüngen 21 auf dem Gehäuse 11 ab, wodurch die Nase 5 gegenüber dem Rastelement 13 vorgespannt wird.

Die Rastfeder 3 liegt in einer kreisbogenförmigen Aussparung im Gehäuse 11, wodurch sie in Umfangsrichtung festgelegt ist. Diese Festlegung beinhaltet ein zusätzliches Spiel, nämlich den Überschaltweg 17, innerhalb dessen die Rastfeder 3 sich in Umfangsrichtung hin und her bewegen kann. Zu Orientierung der Rastfeder an eine bestimmte Seite, nämlich an die der Handbetätigung H zugewandte Seite, ist eine Überschaltfeder 7 vorgesehen, die enteilig mit der Rastfeder 3 verbunden, aber auch als separate Überschaltfeder 7b in Form einer Tellerfeder oder als separate Überschaltfeder 7c in Form einer Spiralfeder angeordnet sein kann. Wahlweise kann ein Anschlag 9 angeordnet sein, der den Weg der Überschaltfeder 7 exakt begrenzt und den Überschaltweg 17 definiert.

Gemäß der Fig. 5 wird eine Rastfeder 3' beschrieben, die ebenfalls bügelförmig ausgeformt ist und als Blattfeder aus Stahl-Band-Material besteht. Diese Rastfeder 3' weist ebenfalls zur Ergänzung einer Haltekraft gegenüber den Rasten 19 im Rastelement 13 eine Nase 5' auf, die aus einer Vorspannung resultiert, die von zwei Vorsprüngen 21' und 21'' erzeugt wird, welche sich am Gehäuse 11 abstützen. Am Vorsprung 21' ist die Rastfeder 3' einteilig mit einer Überschaltfeder 7' verbunden, die sich gegen die Flanke am Gehäuse 11 anlegen kann. Zur besseren Flexibilität der Überschaltfeder 7' können Aussparungen 7'' angeordnet sein, die das Band-Material örtlich schwächen und eine weichere Federrate gegenüber dem ungeschwächten Band-Material der Rastfeder 3' zulassen.

Die Wirkungsweise des Rastenschalters 1 ist an einer schematischen Skizze gemäß Abbildung 2 zu erklären. Als Analogie zur Fig. 1 sind die gleichlautenden Bezeichnungen mit gleichen Ziffern mit angefügtem 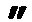 a" bezeichnet. Wird das Rastelement 13a im Gehäuse 11a durch die Handbetätigung H in Richtung der Handbetätigung H gezogen, so soll die Kette von einem kleineren auf einen jeweils größeren Zahnkranz übergeführt werden. Wegen der geringeren Steigwilligkeit der Kette in dieser Schaltrichtung wird über die angestrebte Position der Kettenschaltung K um den Überschaltweg 17 hinaus geschaltet, wodurch, sich der Aufsteigewinkel der Kette gegenüber dem größeren Zahnkranz vergrößert und die Umschaltung erfolgt. Bei der heutigen Qualität der Schaltelemente von Kettenschaltungen genügt es, diese Überschaltposition nur sehr kurze Zeit beizubehalten, was dazu führt, daß der Benutzer lediglich bis zum nächsten Widerstand schaltet , um anschließend loszulassen. Er hat, ohne es zu merken oder gar zu beabsichtigen, den Überschaltweg 17 in Anspruch genommen. Gemäß Fig. 2 kann das Rastelement über eine Kompensationsfeder 15a mit dem Gehäuse 11a verbunden sein, was den Vorteil hat, daß die Schaltbewegung in Richtung zum jeweils größeren Zahnkranz hin erleichtert wird, da die Kompensationsfeder 15a als Zugfeder der Federkraft aus dem Parallelogramm der Kettenschaltung K entgegenwirkt. Die Kompensationsfeder 15a kann aber auch weggelassen werden, da der eigentliche Schaltvorgang zwischen dem Rastelement 13a und der Rastfeder 3a nicht tangiert wird. Wird das Rastelement 13a sodann weiter in Richtung Handbetätigung H bewegt, so wird als erste die Überschaltfeder 7a von der Rastnase 5a zusammengepreßt und der Überschaltweg 17 durch die Rastnase 5a auf der Rastfeder 3a aufgezehrt. Erst dann springt die Rastnase 5a aus der jeweiligen Raste 19a heraus und gleitet in die nächste Raste 19a, wobei die Position der Rastnase 5a auf der Rastfeder 3a sich nicht verändert. Erst nach Loslassen der Handbetätigung H bringt die Überschaltfeder 7a das Rastelement 13a in Verbindung mit der Rückholfeder in der Kettenschaltung K in die gewünschte präzise Schaltposition zurück.

## Patentansprüche

1. Schalter für eine Kettenschaltung für Fahrräder, umfassend ein Gehäuse (11), ein Rastelement (13), das sowohl mit der Handbetätigung (H) als auch mit der Kettenschaltung (K) verbunden ist sowie eine Rastfeder (3) aus federelastischem Kunststoffmaterial, deren Nase (5) mit Rasten (19) des Rastelements (13) zusammenwirkt und zwischen dem Gehäuse (11) und der Rastfeder (3) einen Überschaltweg (17) aufweist, wobei die Rastfeder (3) in einer Aussparung des Gehäuses (11) angeordnet ist, dadurch gekennzeichnet daß in der Aussparung zusätzlich zu der Rastfeder (3) in Bewegungsrichtung gesehen nachgeordnet eine Überschaltfeder (7) angeordnet ist, die dort eine Vorspannung zwischen das Gehäuse (11) und die Rastfeder (3) legen kann und auf Block drückbar ist.

2. Schalter nach Anspruch 1, dadurch gekennzeichnet, daß der Federweg der Überschaltfeder (7) dem vorgesehenen Überschaltweg (17) an der Kettenschaltung entspricht.

3. Schalter nach Anspruch 1, dadurch gekennzeichnet, daß die Überschaltfeder (7) einteilig mit der Rastfeder (3) verbunden ist.

4. Schalter nach Anspruch 3, dadurch gekennzeichnet, daß die Rastfeder (3) einen Anschlag (9) aufweist, der den Überschaltweg (17) durch Zusammenwirken mit der Überschaltfeder (7) begrenzt.

5. Schalter nach Anspruch 1, dadurch gekennzeichnet, daß die Überschaltfeder (7b) als Tellerfeder ausgebildet ist.

6. Schalter nach Anspruch 1, dadurch gekennzeichnet, daß die Überschaltfeder (7c) als Spiralfeder ausgebildet ist.

7. Schalter für eine Kettenschaltung für Fahrräder, umfassend ein Gehäuse (11), in Rastelement (13), das sowohl mit der Handbetätigung (H) als auch mit der Kettenschaltung (K) verbunden ist, sowie eine Rastfeder (3'), deren Nase (5') mit Rasten (19) des Rastelements (13) zusammenwirkt und zwischen dem Gehäuse (11) und der Rastfeder (3') einen Überschaltweg (17) aufweist wobei, die Rastfeder (3') in einer Aussparung des Gehäuses (11) angeordnet ist, dadurch gekennzeichnet daß in der Aussparung zusätzlich zu der Rastfeder (3') in Bewegungsrichtung gesehen nachgeordnet eine mit der Rastfeder (3') einteilig verbundene Überschaltfeder (7') angeordnet ist, die dort eine Vorspannung zwischen dem Gehäuse (11) und die Rastfeder (3') legen kann.

8. Schalter nach Anspruch 7, dadurch gekennzeichnet, daß die Rastfeder (3') aus Stahl-Band-Material besteht.

## Claims

1. Control device for a derailleur gear for bicycles, comprising a housing (11), a detent element (13), which is connected both to the manual lever (H), and also to the derailleur gear (K) as well as a detent spring (3) of springy plastics material, of which the nose (5) co-operates with teeth (19) on the detent element (13) and has an over-travel movement (17) between the housing (11) and the detent spring (3), the detent spring (3) being arranged in a recess in the housing (11), characterised in that there is also present in the recess in addition to the detent spring 3 and arranged downstream looking in the direction of movement, an over-travel spring 7 which can apply a pre-load between the housing (11) and the detent spring (3) and can be compressed solid.

2. Control device according to claim 1, characterised in that the spring travel of the over-travel spring (7) corresponds to the over-travel (17) provided in the derailleur gear.

3. Control device according to claim 1, characterised in that the over-travel spring (7) is connected integrally to the detent spring (3).

4. Control device according to claim 3, characterised in that the detent spring (3) has a stop (9) which limits the amount of the over-travel (17) by co-operation with the over-travel spring (7).

5. Control device according to claim 1, characterised in that the over-travel spring (7b) is in the form of a plate-spring.

6. Control device according to claim 1, characterised in that the over-travel spring (7c) is in the form of a coil spring.

7. Control device for a derailleur gear for bicycles comprising a housing (11), a detent element (13) connected both to the manual lever (H) also to the derailleur gear (K) as well as a detent spring (3'), of which the nose (5') co-operates with teeth (19) on the detent element (13) and has an over-travel (17) between the housing (11) and the detent spring (3'), the detent spring being arranged in a recess in the housing (11), characterised in that in the recess, following the detent spring (3') looking in the direction of movement, there is in addition provided an over-travel spring (7') connected integrally with the detent spring (3') and capable of applying a pre-load therebetween the housing (11) and the detent spring (3').

8. Control device according to claim 7, characterised in that the detent spring (3') is made of strip steel material.

## Revendications

1. Dispositif de commande pour dérailleur de bicyclette, comprenant un boîtier (11), un élément d'arrêt (13) relié à la fois à l'actionnement manuel (H) et au dérailleur de chaîne (K), un ressort d'arrêt (3) fait d'une manière plastique élastique présentant une dent (5) coopérant avec des crans d'arrêt (19) de l'élément d'arrêt (13), une course de commutation (17) existant entre le boîtier (11) et le ressort d'arrêt (3) qui est monté dans un évidement de ce boîtier,
caractérisé en ce qu'.
en plus du ressort d'arrêt (3), l'évidement du boîtier (11) contient, en aval du ressort (3) par rapport à la direction du mouvement, un ressort (7) de course de commutation qui peut créer une tension entre le boîtier (11) et le ressort (3) et qui peut être comprimé à bloc.

2. Dispositif selon la revendication 1,
caractérisé en ce que
la course élastique du ressort de course de commutation (7) correspond à la course de commutation (17) prévue sur le dérailleur.

3. Dispositif selon la revendication 1,
caractérisé en ce que
le ressort de course de commutation (7) constitue une seule pièce avec le ressort d'arrêt (3).

4. Dispositif selon la revendication 3,
caractérisé en ce que
le ressort d'arrêt (3) comporte une butée (a) qui limite la course de commutation (17) par coopération avec le ressort de course de commutation (7).

5. Dispositif selon la revendication 1,
caractérisé en ce que
le ressort de course de commutation (7b) est une rondelle Belleville.

6. Dispositif selon la revendication 1,
caractérisé en ce que
le ressort de course de commutation (7c) est un ressort hélicoïdal.

7. Dispositif de commande pour dérailleur de bicyclette, comprenant un boîtier (11), un élément d'arrêt (13) relié à la fois à l'actionnement manuel (H) et au dérailleur de chaîne (K), un ressort d'arrêt (3') présentant une dent (5') coopérant avec des crans d'arrêt (19) de l'élément d'arrêt (13), une course de commutation (17) existant entre le boîtier (11) et le ressort d'arrêt (3') qui est monté dans un évidement du boîtier (11),
caractérisé en ce qu'
en plus du ressort d'arrêt (3'), l' évidement du boîtier (11) contient en aval du ressort par rapport à la direction du mouvement, un ressort (7') de course de commutation, ne faisant qu'une pièce avec le ressort d'arrêt (3') et créant une tension contre le boîtier (11) et le ressort d'arrêt (3').

8. Dispositif selon la revendication 7,
caractérisé en ce que
le ressort d'arrêt (3') est fait d'un ruban d'acier.
